# EUROPÄISCHE PATENTANMELDUNG

(11) **EP 3 753 877 A1**
(43) Veröffentlichungstag der Anmeldung: **23.12.2020**
(21) Anmeldenummer: 20000057.8
(22) Anmeldetag: 10.02.2020
(51) Int. Cl.: B65G 53/24, B65G 53/36, B65G 53/56

(54) **SAUGFÖRDERSYSTEM FÜR SCHÜTTGUT, INSBESONDERE KUNSTSTOFFGRANULAT**

(30) Priorität: 27.02.2019 DE 102019001471
(71) Anmelder: Kramer, Walter, 6333 Hünenberg See (CH)
(72) Erfinder: Kramer, Walter, 6333 Hünenberg See (CH)
(74) Vertreter: Kohl, Karl-Heinz

(57) **Zusammenfassung**

Das Saugfördersystem hat mindestens zwei Lagerstellen (I bis III) und wenigstens zwei Verbraucher (1 bis 4), die über Zuführungsleitungen (5 bis 7) und Abführungsleitungen (15 bis 18) miteinander verbunden sind. Zur Schaltung der Förderwege des Schüttgutes von den Lagerstellen (I bis III) zu den Verbrauchern (1 bis 4) sind Ventile (9 bis 11; 12 bis 14) vorgesehen. Das Saugfördersystem hat außerdem wenigstens eine Vakuumquelle (23). In einer zentralen Materialleitung (8) ist für jede Zuführungsleitung (5 bis 7) und für jede Abführungsleitung (15 bis 18) jeweils ein Ventil (9 bis 11; 12 bis 14) vorgesehen. Sie haben wenigstens zwei Ventilelemente (34, 35), von denen die einen Ventilelemente (34) selbst die Materialleitung (8) oder zumindest einen Teil von ihr bilden. Die Materialleitung (8) hat daher keine Anschlüsse, an welche Ventile angeschlossen werden müssen.

## Beschreibung

Die Erfindung betrifft ein Saugfördersystem für Schüttgut, insbesondere Kunststoffgranulat, nach dem Oberbegriff des Anspruches 1 bzw. des Anspruches 5.

Bei Förderanlagen für Schüttgut werden Lagerstellen, welche das Schüttgut enthalten und beispielsweise Silos sind, über Zuführungsleitungen und Abführungsleitungen mit Verbrauchern verbunden. Um eine gewünschte Lagerstelle mit einem gewünschten Verbraucher zu verbinden, ist im Strömungsweg zwischen den Lagerstellen und den Verbrauchern ein sog. Kupplungsbahnhof vorgesehen, mit dem der Strömungsweg des Schüttgutes aus der jeweiligen Lagerstelle zum jeweiligen Verbraucher geschaltet werden kann. Solche Kupplungsbahnhöfe können beispielweise in Form einer Kupplungsmatrix ausgebildet sein, die eine Vielzahl von Leitungen und Ventile enthält, die je nach dem gewünschten Förderweg des Schüttgutes von der Lagerstelle zum Verbraucher geschaltet werden müssen. Solche Kupplungsbahnhöfe sind allerdings teuer und bedingen einen erheblichen Montageaufwand.

Der Erfindung liegt die Aufgabe zugrunde, das gattungsgemäße Saugfördersystem so auszubilden, dass in konstruktiv einfacher Weise eine Strömungsverbindung zwischen einer ausgewählten Lagerstelle und einem ausgewählten Verbraucher hergestellt werden kann.

Diese Aufgabe wird beim gattungsgemäßen Saugfördersystem mit den kennzeichnenden Merkmalen des Anspruches 1 bzw. des Anspruches 5 gelöst.

Das erfindungsgemäße Saugfördersystem gemäß Anspruch 1 weist anstelle eines Kupplungsbahnhofes eine zentrale Materialleitung auf, in die im Bereich der Lagerstellen mit den Ventilen das Material aus der Lagerstelle zugeführt wird. Im Bereich der Verbraucher ist die Materialleitung mit weiteren Ventilen versehen, über die das Material bei entsprechender Schaltstellung des Ventiles dem jeweiligen Verbraucher zugeführt werden kann. Die den Lagerstellen und den Verbrauchern zugeordneten Ventile können in zwei Stellungen geschaltet werden. In der ersten Stellung wird die Materialleitung auf Durchgang freigeschaltet, d.h. die Lagerstellen und die Verbraucher sind strömungstechnisch von der Materialleitung abgekoppelt. In der zweiten Stellung stellen die Ventile die Leitungsverbindung zwischen der ausgesuchten Lagerstelle und dem ausgesuchten Verbraucher her. In diesem Falle wird der von der Vakuumquelle erzeugte Saug/Luftstrom so zugeführt, dass das Material aus der ausgewählten Lagerstelle der Materialleitung zugeführt und im Bereich des ausgesuchten Verbrauchers aus der Materialleitung abgeführt werden kann, so dass über den Saug/Luftstrom das Material in den ausgewählten Verbraucher gelangt. Das Saugfördersystem zeichnet sich durch einen sehr einfachen Aufbau aus. Die Koppelung zwischen dem ausgesuchten Verbraucher und der ausgesuchten Lagerstelle erfolgt über eine einzige zentrale Materialleitung. Sie kann im Saugfördersystem beliebig angeordnet sein, weil die Ventile selbst Bestandteil der Materialleitung sind. Die Materialleitung hat keine Anschlüsse, an welche die Ventile angeschlossen werden müssten.

Vorteilhaft sind die Abführungsleitungen des Saugfördersystems an Abscheidebehälter angeschlossen, die den Verbrauchern zugeordnet sind. Das geförderte Material gelangt zunächst in die Abscheidebehälter, aus denen das Material zu einem vorgegebenen Zeitpunkt den Verbrauchern übergeben wird.

Die Abscheidebehälter sind über Vakuumventile an eine Vakuumleitung angeschlossen, die mit der Vakuumquelle verbunden ist. Bei der Förderung des Materials wird das Vakuumventil desjenigen Abscheidebehälters, dem dieses Material zugeführt wird, geöffnet, so dass über das geöffnete Vakuumventil das Material aus der ausgewählten Lagerstelle gefördert werden kann.

Die Ventile weisen in besonders bevorzugter Ausführung zwei Ventilelemente auf. Das eine Ventilelement schaltet den Durchgang der Materialleitung in der einen Stellung diese Ventiles frei. Dieses Ventilelement bildet einen Teil der Materialleitung. Das andere Ventilelement stellt die Abzweigung von der Materialleitung in den ausgewählten Verbraucher bzw. in die ausgewählte Lagerstelle her.

Das erfindungsgemäße Saugfördersystem gemäß Anspruch 5 zeichnet sich ebenfalls dadurch aus, dass die Ventile innerhalb der Materialleitung liegen und selbst Bestandteil der Materialleitung sind. Befinden sich die Ventile der Lagerstellen sowie der Verbraucher in der ersten Stellung, dann ist die Materialleitung über ihre gesamte Länge freigeschaltet und bildet eine durchgehende Leitung. Soll Material einer der Lagerstellen entnommen und einem der Verbraucher zugeführt werden, werden die entsprechenden Ventile der jeweiligen Lagerstelle sowie des jeweiligen Verbrauchers in die zweite Stellung geschaltet. Dann kann der Saug/Luftstrom das Material der jeweiligen Lagerstelle entnehmen und über die geöffneten Ventile dem ausgesuchten Verbraucher zuführen. Die Ventile der Verbraucher sind so gestaltet, dass sie nicht nur den Luftstrom aus der Materialleitung abführen, sondern gleichzeitig diesen Luftstrom über einen weiteren Anschluss der Materialleitung wieder zuführen. Der Teil der Materialleitung, der in Förderrichtung des Materials hinter dem geschalteten Ventil liegt, dient dann als Vakuumleitung, die mit der Vakuumquelle verbunden ist. Dadurch können gesonderte Vakuumventile auf Abscheidebehältern sowie auch eine gesonderte Vakuumleitung entfallen. Dies trägt zu einer besonders kostengünstigen und konstruktiv einfachen Ausbildung des Saugfördersystems bei.

Vorteilhaft ist die Materialleitung zur Vakuumquelle weitergeführt, so dass die in Förderrichtung des Materials hinter dem umgeschalteten Ventil befindlichen Abschnitte der Materialleitung als Vakuumleitung dienen können.

Vorteilhaft sind die den Verbrauchern zugeordneten Ventile über die Abführungsleitungen und Luftrückführleitungen mit dem Verbraucher verbunden. Über die Abführungsleitungen gelangt das von der Lagerstelle geförderte Material in den ausgewählten Verbraucher.

Das erfindungsgemäße Saugfördersystem nach Anspruch 8 zeichnet sich dadurch aus, dass die einen Ventilelemente der Ventile selbst die Materialleitung oder zumindest einen Teil von ihr bilden.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand dreier in den Zeichnungen dargestellter Ausführungsformen näher erläutert. Es zeigen
- Fig. 1: in schematischer Darstellung ein erfindungsgemäßes Saugförder-system in einer Ausgangslage, in der ein Saugfördervorgang nicht stattfindet,
- Fig. 2: das Saugfördersystem gemäß Fig. 1 beim Saugfördervorgang,
- Fig. 3 und Fig. 4: in Darstellungen entsprechend den Fig. 1 und 2 eine zweite Ausführungsform eines erfindungsgemäßen Saugfördersystems,
- Fig. 5 und Fig. 6: in Darstellungen entsprechend den Fig. 1 und 2 eine dritte Ausführungsform eines erfindungsgemäßen Saugfördersystems.

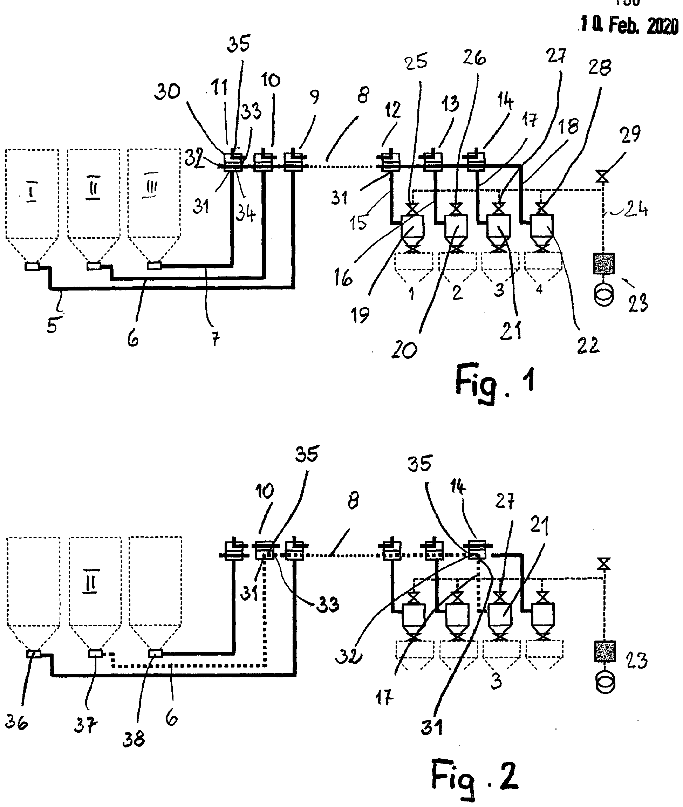

Fig. 1 zeigt schematisch ein pneumatisches Saugfördersystem, mit dem Schüttgut von wenigstens einer Lagerstelle I bis III zu wenigstens einem Verbraucher 1 bis 4 gefördert wird. In Fig. 1 sind beispielhaft drei Lagerstellen I bis III und vier Verbraucher 1 bis 4 dargestellt. Die Zahl der Lagerstellen und Verbraucher ist aber nur beispielhaft zu verstehen.

In den Lagerstellen I bis III wird das zu transportierende Schüttgut gelagert. Als Verbraucher 1 bis 4 kommen beispielsweise Verarbeitungsmaschinen, Misch- und Trocknungsanlagen und dergleichen in Betracht.

Unter Schüttgut ist jegliches Gut zu verstehen, das mittels ein Saug/Luftstromes gefördert werden kann, wie beispielsweise rieselfähiges Pulver, Granulat und dgl..

Jede Lagerstelle I bis III ist über Zuführungsleitungen 5 bis 7 an eine zentrale Materialleitung 8 angeschlossen.

Die Anbindung der Zuführungsleitungen 5 bis 7 an die Materialleitung 8 erfolgt über jeweils ein Ventil 9 bis 11.

In der Materialleitung 8 sitzen weitere Ventile 12 bis 14, die über Abführungsleitungen 15 bis 18 mit Abscheidebehältern 19 bis 22 verbunden sind, die auf den Verbrauchern 1 bis 4 sitzen.

Zur Erzeugung des Unterdrucks dient eine Vakuumquelle 23, die in bekannter Weise über eine Vakuumleitung 24 mit den Abscheidebehältern 19 bis 22 verbunden ist. Sie sind über jeweils ein Vakuumventil 25 bis 28 an die Vakuumleitung 24 angeschlossen.

In der Vakuumleitung 24 kann im Bereich zwischen der Vakuumquelle 23 und den Abscheidebehältern 19 bis 22 ein Falschluftventil 29 sitzen. Damit können die Ventile 9 bis 11, 12 bis 14 ohne Materialstrom/Luftstrom geschaltet werden.

Die Ventile 9 bis 11 und 12 bis 14 sind gleich ausgebildet. Nachfolgend wird die Gestaltung des Ventiles 11 beschrieben.

Das Ventil 11 hat das Ventilgehäuse 30, das einen Einlass 31 aufweist, an den die Zuführungsleitung 7 angeschlossen ist. Außerdem ist das Ventilgehäuse 30 mit zwei weiteren Einlässen 32, 33 versehen.

Im Ventil 11 befinden sich zwei Ventilelemente 34, 35, die gegeneinander abgedichtet sind. Das Ventilelement 34 ist als Rohr ausgebildet, das in der in Fig. 1 dargestellten Position die beiden einander gegenüberliegenden Einlässe 32, 33 miteinander verbindet und gleichzeitig den Einlass 31 verschließt.

Das Ventilelement 35 ist als Rohrbogen ausgebildet, der in der in Fig. 1 dargestellten Position seine Außerbetriebslage einnimmt. Für den Fördervorgang wird das Ventilelement 35 in eine Durchlassstellung verstellt, in der es den Einlass 31 mit dem Auslass 33 leitungsverbindet.

Die beiden Ventilelemente 34, 35 können im Ventilgehäuse 30 in zwei unterschiedliche Positionen verstellt werden, wie sich aus einem Vergleich der Fig. 1 und 2 ergibt.

Findet kein Saugvorgang statt, sind die Ventile 9 bis 11 und 12 bis 14 so geschaltet, dass die Ventilelemente 34 die einander gegenüberliegenden Einlässe 32, 33 leitungsverbinden. Die Vakuumventile 25 bis 28 der Abscheidebehälter 19 bis 22 sind geschlossen. Sämtliche Ventile 9 bis 14 sind auf Transit geschaltet.

Die Ventilelemente 34 bilden einen Teil der Materialleitung 8, die sich in der Transitstellung aller Ventile 9 bis 14 (Fig. 1) durch diese Ventile erstreckt. Im Unterschied zu bekannten Fördersystemen ist keine Materialleitung vorgesehen, an die Ventile angeschlossen werden. Diese sind vielmehr Teil der Materialleitung 8 selbst, indem die Ventilelemente 34 Teil der durchgehenden Materialleitung 8 sind.

Soll ein Fördervorgang stattfinden, werden die Ventile 9 bis 11 bzw. 12 bis 14 so geschaltet, dass die gewünschte Lagerstelle I bis III mit dem gewünschten Verbraucher 1 bis 4 verbunden ist. Fig. 2 zeigt beispielhaft den Fall, dass die Lagerstelle II mit dem Verbraucher 3 verbunden ist. Sobald das Vakuumventil 27 des Abscheidebehälters 21 des Verbrauchers 3 öffnet, kann mittels der Vakuumquelle 23 der Fördervorgang beginnen.

Zum Fördern des Gutes aus der Lagerstelle II wird das Ventil 14 umgeschaltet. Dann verbindet das Ventilelement 35 die beiden Einlässe 31, 32 miteinander, so dass das Gut aus der Materialleitung 8 in den Abscheidebehälter 21 gelangt.

Das Ventil 10 wird ebenfalls umgeschaltet, so dass das Ventilelement 35 den Einlass 31 mit dem Einlass 33 verbindet.

Das Gut wird somit aus der Lagerstelle II über die Zuführungsleitung 6, das umgeschaltete Ventil 10, die Materialleitung 8, das umgeschaltete Ventil 14 und die Abführungsleitung 17 in den Abscheidebehälter 21 gefördert. Da die anderen Ventile 9, 11, 12, 13, 25, 26 und 28 nicht umgeschaltet sind, kann das Gut aus der Lagerstelle II gezielt dem Abscheidebehälter 21 und damit dem Verbraucher 3 zugeführt werden.

Die Lagerstellen I bis III sind an ihrem Auslass mit jeweils einer Ansaugvorrichtung 36 bis 38 versehen, die erst dann betätigt wird, wenn Gut der jeweiligen Lagerstelle I bis III entnommen werden soll. Im dargestellten Ausführungsbeispiel ist dementsprechend die Ansaugvorrichtung 37 aktiv, so dass das Gut aus der Lagerstelle II abgesaugt werden kann. Die Ansaugvorrichtungen 36 bis 38 können Ansaugkästen unter den Lagerstellen I bis III oder Ansaugrohre bei offenen Behältern sein.

Nach einer vorgegebenen Saugzeit bzw. Saugmenge wird das Ventil 10 umgeschaltet. Es nimmt damit die Transitstellung ein, wie sie in Fig. 1 dargestellt ist. Die zentrale Materialleitung 8 und die Abführungsleitung 17 werden dann leergesaugt.

Sobald diese Leersaugzeit abgelaufen ist, wird auch das Ventil 14 in die Transitstellung umgeschaltet und das Vakuumventil 27 auf dem Abscheidebehälter 21 geschlossen. Damit ist der Saugfördervorgang abgeschlossen. Alle Ventile 9 bis 14 in der zentralen Materialleitung 8 sind auf Transit geschaltet und die benutzten Förderleitungen zwischen den Ventilen sind staubfrei gereinigt.

Soll eine der Lagerstellen I bis III mit dem Verbraucher 4 verbunden werden, verbleiben die Ventile 12 bis 14 in ihrer in Fig. 1 dargestellten Transitstellung. Es ist nur das jeweilige Ventil 9 bis 11 der Lagerstellen I bis III umzuschalten, so dass das Material von der entsprechenden Lagerstelle I bis III zum Verbraucher 4 gefördert wird, wenn das Vakuumventil 28 geöffnet wird.

Auf die beschriebene Weise können die Lagerstellen I bis III wahlweise mit jedem beliebigen Verbraucher 1 bis 4 verbunden werden. Es müssen lediglich die entsprechenden Ventile 9 bis 11 und 12 bis 14 so geschaltet werden, dass die entsprechende Lagerstelle I bis III mit dem entsprechenden Verbraucher 1 bis 4 verbunden ist. Der Saugvorgang erfolgt in der gleichen Weise, wie zuvor anhand des Ausführungsbeispieles nach Fig. 2 erläutert worden ist.

Zur Zuführung des Materials aus der jeweiligen Lagerstelle I bis III zum jeweiligen Verbraucher 1 bis 4 ist lediglich eine einzige zentrale Materialleitung 8 vorgesehen. Sie ersetzt die bei den herkömmlichen Saugfördersystemen eingesetzten Kupplungsbahnhöfe, die in einer Matrixform eine Vielzahl von Leitungen und Ventilen benötigen, um die Lagerstellen mit dem jeweiligen Verbraucher zu verbinden. Beim beschriebenen Saugfördersystem vereinfacht die einzige Materialleitung 8 den Aufbau erheblich. In der Materialleitung befinden sich lediglich die Ventile 9 bis 11, über die der Zugang zu den Lagerstellen I bis III hergestellt werden kann, und die Ventile 12 bis 14, mit denen der Zugang zu den Abscheidebehältern 19 bis 22 und damit zu den Verbrauchern 1 bis 4 hergestellt werden kann.

Die Gestaltung der beschriebenen Ventile 9 bis 14 mit den beiden Ventilelementen 34, 35 ist bekannt (DE 10 2017 000 423 A1). Bezüglich der Gestaltung der Ventile wird ausdrücklich auf diesen Stand der Technik hingewiesen, der, soweit es die Ausbildung der Ventile betrifft, zum Gegenstand dieser vorliegenden Patentanmeldung gemacht wird.

Die Ventile 9 bis 14 können unmittelbar aneinandergesetzt werden, wobei ihre Ventilelemente 34 in der Transitstellung (Fig. 1) abgedichtet aneinander anschließen und die durchgehende Materialleitung 8 bilden.

Die Ventile 9 bis 11 bzw. 12 bis 14 können auch mit Abstand voneinander liegen. Dann sind zwischen den Ventilen Leitungsstücke vorgesehen, die abgedichtet an die Einlässe 31, 33 der Ventile angeschlossen sind. Die Leitungsstücke, die verhältnismäßig kurz ausgebildet sein können, und die Ventilelemente 34 in der Transitstellung der Ventile bilden in diesem Fall die durchgehende Materialleitung 8.

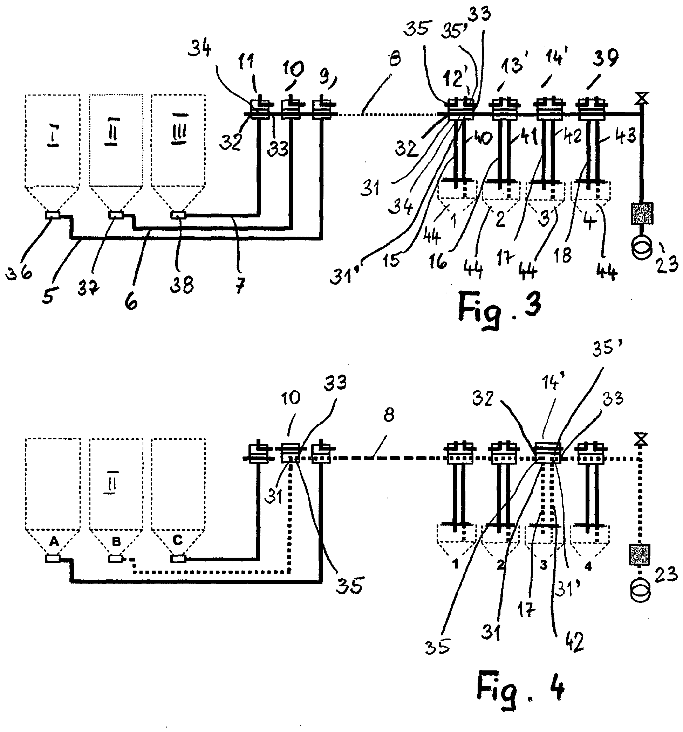

Das Saugfördersystem gemäß den Fig. 3 und 4 hat wiederum beispielhaft die drei Lagerstellen I bis III, die mit den Ansaugvorrichtungen 36 bis 38 versehen sind, an welche die Zuführungsleitungen 5, 6, 7 angeschlossen sind. Über die Ventile 9 bis 11 sind die Zuführungsleitungen 5 bis 7 an die gemeinsame Materialleitung 8 angeschlossen. Die Ventile 9 bis 11 sind gleich ausgebildet wie bei der vorigen Ausführungsform.

In der Materialleitung 8 sitzen die Ventile 12' bis 14', 39, über die die Verbraucher 1 bis 4 an die Materialleitung 8 angeschlossen werden können.

Die Ventile 12' bis 14', 39 sind gleich ausgebildet. Diese Ventile haben die Einlässe 32, 33, die durch das Ventilelement 34 in der Transitstellung des Ventiles miteinander verbunden werden können.

Darüber hinaus haben diese Ventile die Ventilelemente 35 und 35', die jeweils als Rohrbogen ausgebildet sind und die Materialleitung 8 bei entsprechender Ventilstellung mit den Abführungsleitungen 15 bis 18 sowie mit Rückführleitungen 40 bis 43 verbinden können.

Die Ventile 12' bis 14', 39 haben außer dem Einlass 31 noch einen zweiten Einlass 31'. An den Einlass 31 sind die Abführungsleitungen 15 bis 18 und an den Einlass 37' die Rückführleitungen 40 bis 43 angeschlossen.

Solange keine Förderung stattfindet, sind die Ventile 9 bis 11, 12' bis 14', 39 auf Transit geschaltet (Fig. 3). In dieser Ventilstellung verbinden die als gerade Rohrstücke ausgebildeten Ventilelemente 34 die Einlässe 32, 33 der jeweiligen Ventile miteinander und bilden in der anhand der vorigen Ausführungsform beschriebenen Weise die durchgehende Materialleitung 8 (Fig. 3).

Die Materialleitung 8 ist nach dem Ventil 39 direkt zur Vakuumquelle 23 weitergeführt. Im Unterschied zur vorigen Ausführungsform entfallen dadurch die Vakuumleitung 24 sowie die Vakuumventile 25 bis 28 auf den Abscheidebehältern 19 bis 22. Bei den meisten Verarbeitungsmaschinen, wie Spritzgießmaschinen oder Extrudern, kann der Maschinentrichter 44 selbst als Abscheidebehälter für das zu verarbeitende Gut genutzt werden.

Wie beim vorigen Ausführungsbeispiel kann jede der Lagerstellen I bis III mit jedem der Verbraucher 1 bis 4 verbunden werden. In Fig. 4 ist beispielhaft dargestellt, wie die Lagerstelle II mit dem Verbraucher 3 verbunden werden kann. Das Ventil 10 ist umgeschaltet, so dass das als Rohrbogen ausgebildete Ventilelement 35 entsprechend der vorigen Ausführungsform den Einlass 31 mit dem Auslass 33 des Ventiles 10 verbindet.

Das dem Verbraucher 3 zugeordnete Ventil 14' ist ebenfalls umgeschaltet, so dass das als Rohrbogen ausgebildete Ventilelement 35 den Einlass 32 mit dem Einlass 31 und das andere, als Rohrbogen ausgebildete Ventilelement 35' den Einlass 31' mit dem Auslass 33 verbindet.

Durch die Umschaltung des Ventiles 14' wird die Materialleitung 8 mit der Abführungsleitung 17 leitungsverbunden, so dass das von der Lagerstelle II kommende Gut dem Verbraucher 3 zugeführt werden kann. Außerdem wird über das umgeschaltete Ventil 14' die Vakuumquelle 23 mit der Rückführleitung 42 leitungsverbunden.

Die Vakuumquelle 23 saugt nunmehr über den Verbraucher 3 und die Materialleitung 8 das Gut aus der Lagerstelle II an. Nach einer vorgegebenen Saugzeit bzw. Saugmenge wird das Ventil 10 wieder in die Transitstellung (Fig. 3) umgeschaltet. Dies hat zur Folge, dass die Materialleitung 8 einschließlich der Abführungsleitung 17 leergesaugt wird. Sobald die Leersaugzeit abgelaufen ist, wird auch das Ventil 14' in die Transitstellung umgeschaltet, so dass alle Ventile 9 bis 11, 12' bis 14', 39 und die gegebenenfalls zwischen den Ventilen befindlichen Rohrleitungen staubfrei gereinigt sind.

Auf die beschriebene Weise können bei der Ausführungsform gemäß den Fig. 3 und 4 wahlweise die gewünschten Lagerstellen I bis III mit dem gewünschten Verbraucher 1 bis 4 leitungsverbunden werden.

Die Ventile 12' bis 14', 39 schalten nicht nur die Abführungsleitungen 15 bis 18, sondern gleichzeitig auch die Rückführleitungen 40 bis 43. Dadurch ist eine gesonderte, zusätzlich zur zentralen Materialleitung 8 vorgesehene Vakuumleitung nicht erforderlich.

Im Übrigen entspricht die Ausführungsform nach den Fig. 3 und 4 dem Ausführungsbeispiel nach den Fig. 1 und 2.

Die Ventile 12' bis 14', 39 sind so gestaltet, dass beim Umschalten von der Transit- in die Abzweigstellung beide Ventilelemente 35, 35' gleichzeitig verstellt werden. Die Ventile können als Schieberventile ausgebildet sein, so dass durch einen Verschiebevorgang wahlweise das Ventilelement 34 oder die Ventilelemente 35, 35' in ihre jeweilige Stellung gebracht werden können. Die Ventile 12' bis 14', 39 können auch als Drehventile ausgebildet sein, so dass durch einen Drehvorgang die Ventilelemente 34 bzw. 35, 35' in ihre jeweilige Stellung gelangen.

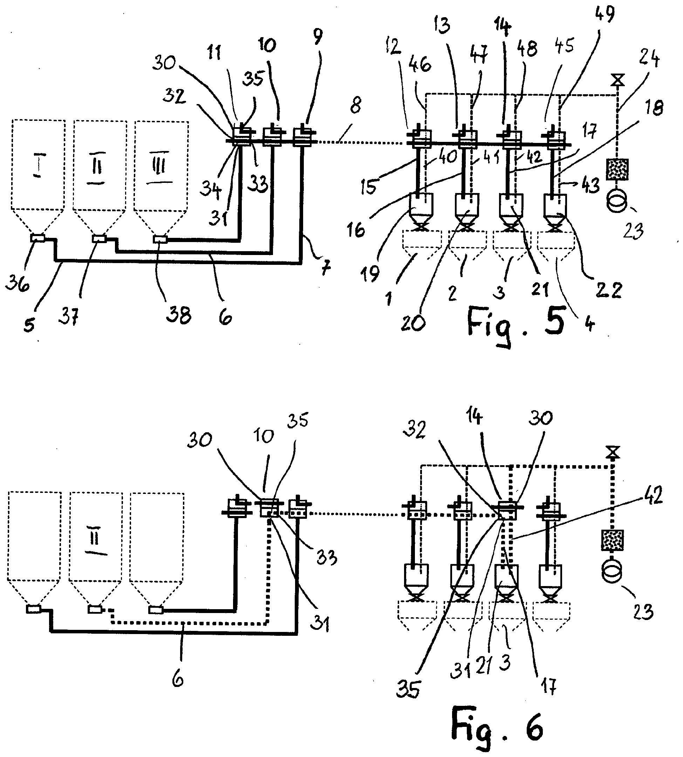

Bei der Ausführungsform nach den Fig. 5 und 6 sind die Lagerstellen I bis III über die Ansaugvorrichtungen 36 bis 38 und die Zuführungsleitungen 5, 6, 7 an die Ventile 9 bis 11 angeschlossen, die gleich ausgebildet sind wie bei den vorigen Ausführungsbeispielen. Die Abscheidebehälter 19 bis 22, die auf den Verbrauchern 1 bis 4 sitzen, sind über die Abführungsleitungen 15 bis 18 an die Ventile 12 bis 14, 45 angeschlossen, die gleich wie die Ventile 9 bis 11 ausgebildet sind. Die Ventile 9 bis 11, 12 bis 14, 45 haben entsprechend der Ausführungsform gemäß den Fig. 1 und 2 die beiden Ventilelemente 34, 35. Das Ventilelement 34 ist in der beschriebenen Weise als gerades Rohrstück ausgebildet, das die einander gegenüberliegenden Einlässe 32, 33 des Ventilgehäuses 30 in der Durchlass- bzw. Transitstellung miteinander verbindet. Das andere Ventilelement 35 ist in der beschriebenen Weise als Rohrbogen ausgebildet, der in der Betriebsstellung den Einlass 31 mit dem Auslass 33 des Ventilgehäuses 30 verbindet.

Von der Vakuumleitung 24 gehen Abzweigleitungen 46 bis 49 ab, welche die Vakuumquelle 23 mit den Ventilen 12 bis 14, 45 verbinden. An diese sind die Rückführleitungen 40 bis 43 entsprechend der Ausführungsform gemäß den Fig. 3 und 4 angeschlossen.

Wie bei den vorigen Ausführungsbeispielen bilden die Ventilelemente 34 der Ventile 9 bis 14, 45 die Materialleitung 8, die sich in der in Fig. 5 dargestellten Transitstellung durch alle Ventile erstreckt. Auch bei dieser Ausführungsform ist somit keine Materialleitung vorgesehen, an welche Ventile angeschlossen sind. Vielmehr sind die Ventile selbst Teil der Materialleitung 8, indem ihre Ventilelemente 34 Teil der durchgehenden Materialleitung 8 sind und, sofern die Ventile unmittelbar aneinandersitzen, die Materialleitung 8 bilden. Die rohrbogenförmigen Ventilelemente 35 nehmen ihre Außerbetriebslage ein. Die geraden rohrförmigen Ventilelemente 34 verbinden die Einlässe 32, 33 sämtlicher Ventile 11 bis 14, 45 dichtend miteinander.

In dieser Schaltstellung der Ventile sind die Rückführleitungen 40 bis 43 geschlossen.

Entsprechend den vorigen Ausführungsbeispielen kann jede Lagerstelle I bis III mit jedem Verbraucher 1 bis 4 leitungsverbunden werden. Es ist daher möglich, jedem Verbraucher 1 bis 4 jedes des in den Lagerstellen 1 bis 3 gelagerten Materials zuzuführen.

In Fig. 6 ist beispielhaft dargestellt, wie Material aus der Lagerstelle II dem Verbraucher 3 zugeführt wird. Das Ventil 10 ist umgeschaltet, wodurch das rohrbogenförmige Ventilelement 35 den Einlass 31, an den die Zuführungsleitung 6 angeschlossen ist, in der beschriebenen Weise mit dem Auslass 33 des Ventilgehäuses 30 verbindet.

Außerdem wird das Ventil 14 umgeschaltet, wodurch das rohrbogenförmige Ventilelement 35 den Einlass 32 mit dem Einlass 31 des Ventilgehäuses 30 verbindet. Über die an den Einlass 31 angeschlossene Abführungsleitung 17 gelangt das Material in den Abscheidebehälter 21 des Verbrauchers 3.

Gleichzeitig mit dem Umschalten des Ventiles 14 wird die Abzweigleitung 48 mit der Rückführleitung 42 verbunden, so dass über die Vakuumquelle 23 das Material aus der Lagerstelle II angesaugt werden kann.

Alle anderen Ventile 9, 11, 12, 13 und 45 sind nicht umgeschaltet.

Die Vakuumquelle 23 saugt über den Abscheider 21 und die Materialleitung 8 das Material aus der Lagerstelle II an. Nach einer vorgegebenen Saugzeit bzw. Saugmenge wird das Ventil 10 wieder in die Transitstellung gemäß Fig. 5 umgeschaltet. Dadurch wird die Materialleitung 8 einschließlich der Abführungsleitung 17 leergesaugt. Sobald die Leersaugzeit abgelaufen ist, wird auch das Ventil 14 in die Transitstellung umgeschaltet, so dass nunmehr alle Ventile 9 bis 14, 45 und die gegebenenfalls zwischen diesen Ventilen befindlichen Rohrleitungen staubfrei gereinigt sind.

Auf diese Weise können alle Lagerstellen I bis III mit jedem der Verbraucher 1 bis 4 leitungsverbunden werden.

Die Ventile 12 bis 14, 45 stellen nicht nur die Leitungsverbindung zwischen den Lagerstellen I bis III und den Verbrauchern 1 bis 4 für die Materialförderung her, sondern sind gleichzeitig Vakuumventile, die den jeweiligen Abscheider 19 bis 22 mit der Vakuumquelle 23 verbinden.

Im Übrigen arbeitet diese Ausführungsform gleich wie die vorigen Ausführungsbeispiele.

Abweichend von der darstellten Ausführungsform gemäß den Fig. 5 und 6 können die Abführungsleitungen 15 bis 18 sowie die Rückführleitungen 40 bis 43 direkt mit dem Verbraucher 1 bis 4 verbunden sein, wie anhand der Fig. 3 und 4 erläutert worden ist.

Die Ventile 9 bis 11, 12 bis 14 der beschriebenen Ausführungsbeispiele können als Schieber- oder als Drehventile ausgebildet sein.

Bei allen Ausführungsbeispielen ist zwischen den Lagerstellen I bis III und den Verbrauchern 1 bis 4 eine einzige Materialleitung 8 vorgesehen, die durch die Ventile selbst bzw. ihre Ventilelemente 34 und gegebenenfalls noch zusätzlich durch Rohrleitungen bzw. Leitungsstücke gebildet wird. Ein konstruktiv aufwändiger Kupplungsbahnhof, wie er bei üblichen Saugfördersystemen zwischen den Lagerstellen und den Verbrauchern vorgesehen ist, entfällt. Die Saugfördersysteme können dadurch kostengünstig gebaut werden.

## Patentansprüche

1. Saugfördersystem für Schüttgut, insbesondere Kunststoffgranulat, mit mindestens zwei Lagerstellen (I bis III) und mit mindestens zwei Verbrauchern (1 bis 4), die über Zuführungsleitungen (5 bis 7) und Abführungsleitungen (15 bis 18) miteinander verbunden sind, wobei zur Schaltung der Förderwege des Schüttgutes von den Lagerstellen (I bis III) zu den Verbrauchern (1 bis 4) Ventile (9 bis 11; 12 bis 14) vorgesehen sind, und mit wenigstens einer Vakuumquelle (23),
**dadurch gekennzeichnet, dass** in einer zentralen Materialleitung (8) für jede Zuführungsleitung (5 bis 7) und für jede Abführungsleitung (15 bis 18) jeweils ein Ventil (9 bis 11; 12 bis 14) vorgesehen ist, das in einer ersten Stellung die Materialleitung (8) auf Durchgang freischaltet und in einer zweiten Stellung den Saugstrom/Luftstrom der Materialleitung (8) zuführt bzw. von ihr abführt.

2. Saugfördersystem nach Anspruch 1,
**dadurch gekennzeichnet, dass** die Abführungsleitungen (15 bis 18) an Abscheidebehälter (19 bis 22) angeschlossen sind, die den Verbrauchern (1 bis 4) zugeordnet sind.

3. Saugfördersystem nach Anspruch 1 oder 2,
**dadurch gekennzeichnet, dass** die Abscheidebehälter (19 bis 22) über Vakuumventile (25 bis 28) an eine Vakuumleitung (24) angeschlossen sind.

4. Saugfördersystem nach einem der Ansprüche 1 bis 3,
**dadurch gekennzeichnet, dass** die Ventile (9 bis 11; 12 bis 14) zwei Ventilelemente (34, 35) aufweisen, von denen das eine Ventilelement (34) den Durchgang der Materialleitung (8) freischaltet und das andere Ventilelement (35) die Abzweigung von der Materialleitung (8) in den Verbraucher (1 bis 4) bzw. die Lagerstelle (I bis II) herstellt.

5. Saugfördersystem für Schüttgut, insbesondere Kunststoffgranulat, mit mindestens zwei Lagerstellen (I bis III) und mit mindestens zwei Verbrauchern (1 bis 4), die über Zuführungsleitungen (5 bis 7) und Abführungsleitungen (15 bis 18) miteinander verbunden sind, wobei zur Schaltung der Förderwege des Schüttgutes von den Lagerstellen (I bis III) zu den Verbrauchern (1 bis 4) Ventile (9 bis 11; 12' bis 14', 39; 12 bis 14, 45) vorgesehen sind, und mit wenigstens einer Vakuumquelle (23),
**dadurch gekennzeichnet, dass** in einer zentralen Materialleitung (8) für jede Zuführungsleitung (5 bis 7) und für jede Abführungsleitung (15 bis 18) jeweils ein Ventil (9 bis 11; 12' bis 14', 39, 12 bis 14, 45) vorgesehen ist, dass die Ventile (9 bis 11; 12' bis 14', 39, 12 bis 14, 45) der Lagerstellen (I bis III) und der Verbraucher (1 bis 4) in einer ersten Stellung die Materialleitung (8) freischalten, dass die Ventile (9 bis 11) der Lagerstellen (I bis III) in einer zweiten Stellung den Saugstrom/Luftstrom der Materialleitung (8) zuführen, und dass die Ventile (12' bis 14', 39, 12 bis 14, 45) der Verbraucher (1 bis 4) in einer zweiten Stellung den Luftstrom aus der Materialleitung (8) abführen und gleichzeitig über einen weiteren Anschluss (40 bis 43) wieder zuführen.

6. Saugfördersystem nach Anspruch 5,
**dadurch gekennzeichnet, dass** die Materialleitung (8) zur Vakuumquelle (23) weitergeführt ist.

7. Saugfördersystem nach Anspruch 5 oder 6,
**dadurch gekennzeichnet, dass** die verbraucherseitigen Ventile (12' bis 14', 39; 12 bis 14, 45) über die Abführungsleitungen (15 bis 18) und Luftrückführleitungen (40 bis 43) mit dem Verbraucher (1 bis 4) verbunden sind.

8. Saugfördersystem, insbesondere nach einem der Ansprüche 1 bis 7,
**dadurch gekennzeichnet, dass** die einen Ventilelemente (34) der Ventile (9 bis 11; 12 bis 14; 12' bis 14', 39; 12 bis 14, 45) selbst die Materialleitung (8) oder zumindest einen Teil von ihr bilden.

9. Saugfördersystem nach einem der Ansprüche 1 bis 8,
**dadurch gekennzeichnet, dass** die Ventile (12 bis 14, 39) den Zugang zu den Abführleitungen (15 bis 18) und gleichzeitig die Verbindung der Vakuumleitung (24) über die Leitungen (46 bis 49) zu den Rückführleitungen (40 bis 43) herstellen.
